# EUROPEAN PATENT SPECIFICATION

(11) **EP 0 294 017 B1**
(45) Date of publication and mention of the grant of the patent: **08.12.1993**
(21) Application number: 88302450.7
(22) Date of filing: 21.03.1988
(51) Int. Cl.: G02B 6/38, C03B 37/14

(54) **Aligning fibre optic cables**
Ausrichtung von faseroptischen Kabeln
Alignement des câbles à fibre optique

(30) Priority: 01.06.1987 US 57189
(43) Date of publication of application: 07.12.1988
(73) Proprietor: INTERNATIONAL CONTROL AUTOMATION FINANCE S.A., Ville de Luxembourg (LU)
(72) Inventor: Skurtavosky, Eugene, Mayfield Heights Ohio 44124 (US)
(74) Representative: Cotter, Ivan John

(56) References cited:
- FR-A- 2 539 884
- US-A- 3 938 895
- PATENT ABSTRACTS OF JAPAN, vol. 8, no. 65 (P-263)[1502], 27th March 1984; & JP-A-58 211 726 (NIPPON DENSHIN DENWA KOSHA) 09-12-1983
- EXTRACT FROM DIGEST OF "7th Euro. Conf. on Optical Communications", P. 15-1

## Description

This invention relates to a displacement sensor utilising optical fibre cables.

Optical fibres are used extensively in displacement sensor technology. A previously proposed method of obtaining a displacement measurement is to attach a first optical fibre cable to an object whose displacement is to be sensed while a second optical fibre cable, having an end aligned with an end of the first optical fibre cable, is held stationary. One of the optical fibre cables has a light source attached to its other end while the other of the optical fibre cables has a light receiver attached to its other end. When the object is displaced, the light coupling between the two optical fibre cables changes, thus changing the amount of light received by the light receiver from the light source.

An inherent problem associated with the foregoing optical fibre sensor apparatus is the alignment of the ends of the optical fibre cables relative to one another along the three coordinate axes. When measured displacement occurs for example along the X axis, the sensitivity of the sensor depends on the relative position of the ends of the optical fibre cables along this axis. If the ends of the optical fibre cables are misaligned along this axis by more than the diameter of the cables, no signal is transmitted through the cables. The resulting sensitivity of the sensor also depends on misalignment of the ends of the optical fibre cables along the Y axis. In addition, the intensity of the light transmitted depends on the closeness of the ends of the optical fibre cables, i.e. the alignment of the cables along the Z axis.

In an abstract of the proceedings of the 7th European Conference on optical communications at Copenhagen 1981 p.15-1, a bypass switch is disclosed comprising a fixed V-grooved block and a movable V-grooved block, the movable block being mounted on a slide shaft extending transverse to the aligned V-grooves of the blocks and being coupled to the fixed block by leaf spring extending perpendicular to the shaft. Fibres lying in the V-grooves are either aligned or non-aligned according to whether or not the movable block is moved laterally along the shaft by an electro magnetic relay.

According to the invention there is provided a displacement sensor comprising a first optical fibre cable and a second optical fibre cable, the sensor comprising a dual cantilever beam shaped member having a first portion and a second portion displaceable relative to the first portion, the first and second portions respectively of the beam member retaining the first and second optical fibre cables with by an end of the respective cable the ends in spaced apart end to end relationship, and means for retaining the first portion of the beam shaped member stationary while permitting displacement of the second portion of the beam shaped member and the second optical fibre cable relative thereto along one axis of a coordinate set of axes while preventing significant displacement of the second optical fibre cable relative to the first optical fibre cable along the other two axes of the coordinate set of axes, characterised in that a portion of an end face of the end of the first optical fibre cable and a portion of an end face of the end of the second optical fibre cable are blocked to prevent the transmission of light therethrough with the blocked portions of the first and second optical fibre cables being defined by a respective chord and part of the circular periphery of the respective cable, and with the blocked portion of the end face of the end of the first optical fibre cable disposed on an opposite side to the blocked portion of the end face of the end of the second optical fibre cable.

The invention will now be further described, by way of illustrative and non-limiting example, with reference to the accompanying drawings, in which:
Figure 1 is a perspective view of a displacement sensor according to a preferred embodiment of the invention;
Figure 2 is a cross-sectional view of two optical fibre cables, illustrating misalignment of the cables along X and Y axes and also showing a common transmission area A between the two cables;
Figure 3 is a cross-sectional view of two optical fibre cables each having a portion of its end blocked by a light absorbing/reflecting film and showing the common transmission area A therebetween;
Figure 4 is a graph of relative sensitivity versus displacement of a pair of misaligned optical fibre cables having ends that are not blocked;
Figure 5 is a graph of relative sensitivity versus displacement of a pair of misaligned optical fibre cables each having a blocked portion at its respective end as shown in Figure 4;
Figure 6 is a graph of relative transmission versus displacement of a pair of misaligned optical fibre cables having ends that are not blocked;
Figure 7 is a graph of relative transmission versus displacement of a pair of misaligned optical fibre cables each having a blocked portion at its respective end as shown in Figure 4;
Figure 8 is a graph of relative modulation versus displacement of a pair of misaligned optical fibre cables having ends that are not blocked; and
Figure 9 is a graph of relative modulation versus displacement of a pair of misaligned optical fibre cables each having a blocked portion at its respective end as shown in Figure 4.

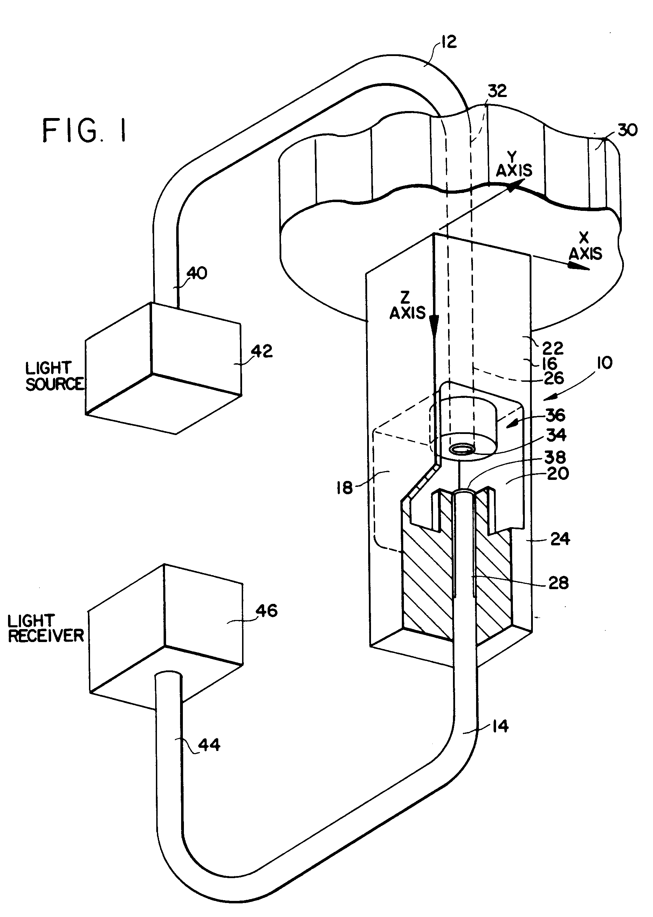

Figure 1 is a perspective view of a displacement sensor 10 for sensing displacement of the ends of optical fibre cables 12 and 14 through the use of a beam member 16 which keeps ends of the cables 12 and 14 in a spaced a part relationship. The beam member 16 is of a dual cantilever beam construction, having oppositely disposed web sections 18 and 20 that interconnect end sections or portions 22 and 24. Aligned bores 26 and 28 are provided in the end sections 22 and 24, respectively. The end section 22 is attached to a fixed member 30 permitting the end section 24 to be displaced with respect thereto along the X axis of a set of coordinate axes comprising X, Y and Z axes. The fixed member 30 has therein an aperture 32 which is aligned with the bore 26 in the end section 22. The optical fibre cable 12 is received through the aperture 32 in the fixed member 30 and is firmly encased within the bore 26 so that an end 34 is positioned within the opening 36 between the web sections 18 and 20. Similarly, the optical fibre cable 14 is received through and firmly encased within the bore 28 in the end section 24 so that an end 38 thereof is positioned within the opening 36. The bores 26 and 28 are aligned along the Y axis, so that the ends 34 and 38 of the respective cables 12 and 14 are similarly aligned. The distance between the ends 34 and 38 of the cables 12 and 14 is maintained as small as possible. It has been found that a distance of between 0.0254 and 0.0508mm (0.001 and 0.002 inches) provides best results.

The opposite end 40 of the optical fibre cable 12 is connected to a light source 42 and the opposite end 44 of the optical fibre cable 14 is connected to a light receiver 46.

In operation, the end section 24 of the beam member 16 is attached to a movable body (not shown), displacement of which is to be measured along the X axis. When such displacement occurs along the X axis the end section 24 also moves, resulting in lateral displacement along the X axis of the end 38 of the optical fibre cable 14 with respect to the end 34 of the optical fibre cable 12. Movement of the end 38 of the cable 14 along the Y and Z axes is mechanically restrained by the structure of the beam member 16. When alignment between the ends 34 and 38 of the cables 12 and 14, respectively, is achieved, light from the light source 42 passes through the cables 12 and 14 and is received by the light receiver 46. Calibration of alignment can be achieved by adjusting either the end section 22 or 24 of the beam member 16 with respect to the X axis in order to obtain repeatability of alignment.

From the foregoing it is apparent that displacement along the X axis of the movable body to which the end section 24 of the beam member 16 is attached varies the light coupling between the ends 34, 38 of the respective optical fibre cables 12, 14. Thus, the amount of light intercepted by the light receiver 46 is a function of the amount of displacement of the movable body along the X axis.

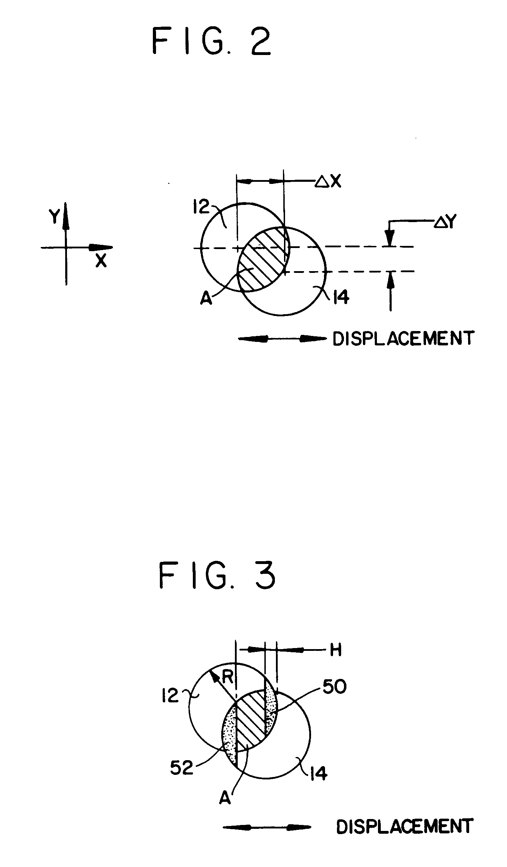

In the foregoing apparatus, as in any optical fibre sensor design, sensitivity is highly dependent on the alignment of the ends 34 and 38 of the optical fibre cables 12 and 14 along both the X and Y axes. Referring to Figure 2, which shows misalignment between the ends 34 and 38 of the respective cables 12 and 14, misalignment along the X axis is shown as ΔX and misalignment along the Y axis is shown as ΔY. Relative transmission between the cables 12 and 14 is defined as the ratio of the transmission area A to the total cross-sectional area of the cable 12 or the cable 14. When there is no misalignment between the ends 34 and 38 of the respective cables 12 and 14, the relative transmission between the cables is assigned the numeral 1 and relative sensitivity is assigned the numeral 2 which is the maximum achievable.

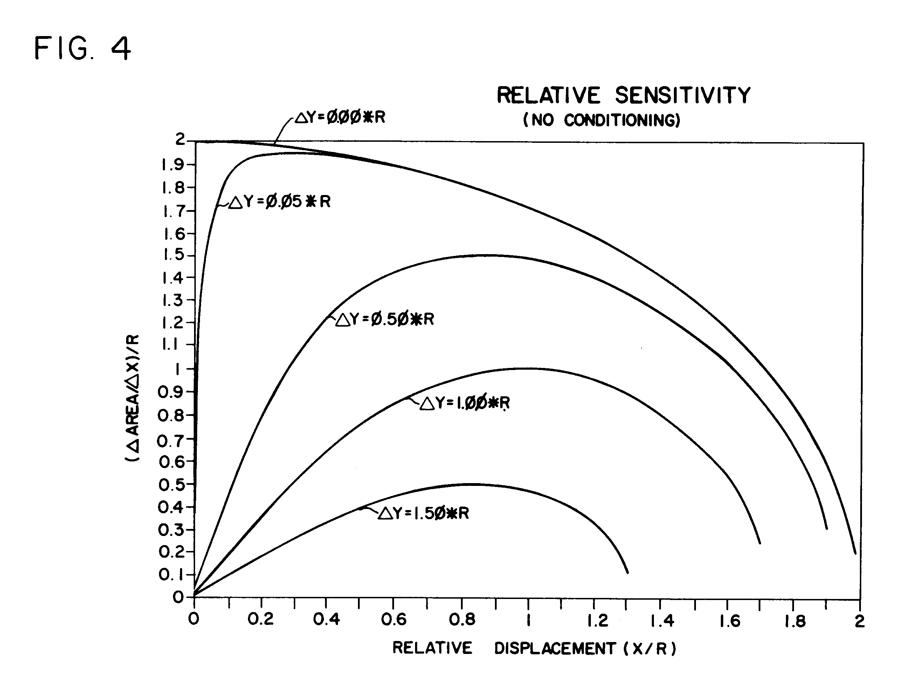

In practice, ΔX and ΔY misalignments of the optical fibre cable ends 34 and 38 could reach up to 1.5 times the radius R of the core of the optical fibre due to a tolerance stack-up (accumulation). This results in a sensitivity of 0.5 or less, as shown in Figure 4. It has been found that previously proposed optical fibre alignment apparatuses often produce inadequate levels of sensitivity, which hinders performance. It is also obvious from Figure 4 that, for a given ΔY misalignment, careful adjustment of the relative position of the ends of the optical fibre cables along the X axis is required to achieve a maximum (or close to a maximum) sensitivity level.

In order to improve sensitivity characteristics of the apparatus 10 shown in Figure 1, and to reduce the effects of misalignment along the X axis, a portion 50 of the end 34 defined by a chord of the circular section of the optical fibre cable 12 is blocked, as shown in Figure 3. Similarly, a portion 52 of the end 38 also defined by a chord of the circular section of the optical fibre cable 14 is also blocked. The blocked portions 50 and 52 are positioned with the chords which define them perpendicular to the axis of displacement being measured and are located on opposite sides of the cable ends 34 and 38. Blocking of the portions 50 and 52 of the cable ends 34 and 38 can be achieved by depositing light absorbing/ reflecting film on the portions of the cable ends to be blocked. When the portions of the cable ends 34 and 38 have been so blocked, displacement between the cable ends causes the transmission area A to change more rapidly than in Figure 2. Thus, blockage of a portion of the cable ends 34 and 38 increases the sensitivity of the apparatus.

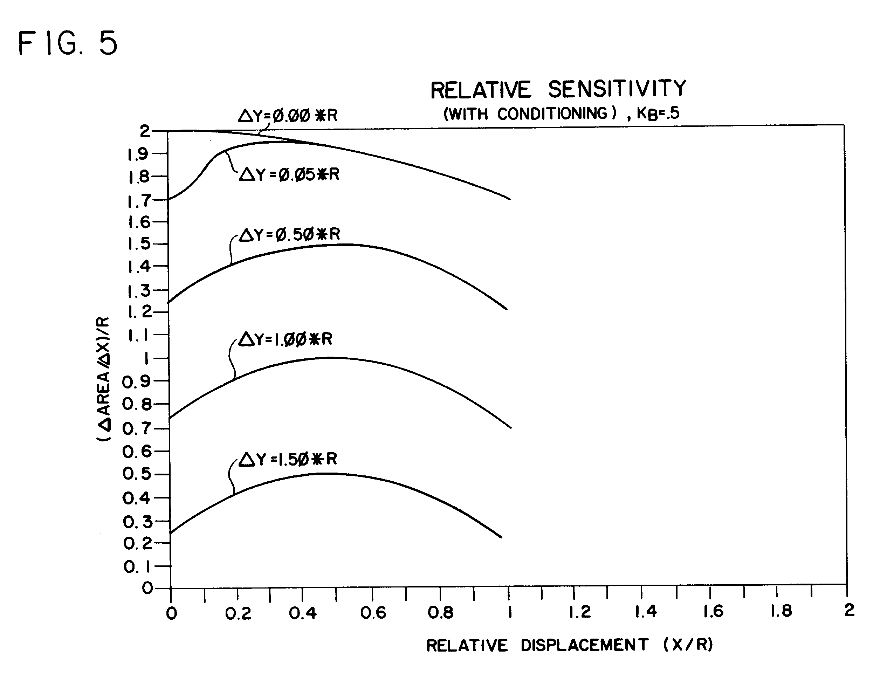

Figure 4 shows the relative sensitivity of the apparatus, without any blockage of the optical fibre cable ends 34 and 38, versus relative displacement of the cable ends. As can be seen, sensitivity increases as ΔY misalignment decreases, and for each ΔY misalignment shown, sensitivity passes through a maximum as displacement along the X axis increases. Figure 5 illustrates apparatus sensitivity with a portion of the optical fibre cable ends 34 and 38 blocked. In this case, one-half of the radius of each optical fibre cable end 34 and 38 is blocked: that is, the blockage ratio, which is defined as the distance H (see Figure 3) divided by the radius R, is equal to 0.5. By comparing Figure 5 with Figure 4, it can be seen that even though the maximum sensitivity for any ΔY misalignment is the same for blocked or unblocked optical fibre cable ends, the sensitivity of the optical fibre cables having a portion of their ends blocked is much less dependent upon alignment along the X axis than in the case of unblocked optical fibre cable ends. Thus, there is no need for a special adjustment of the relative position of the ends of the optical fibre cables 12 and 14 along the X axis when portions of the optical fibre cable ends are blocked since adequate sensitivity is present upon any transmission of light between the optical fibre cables.

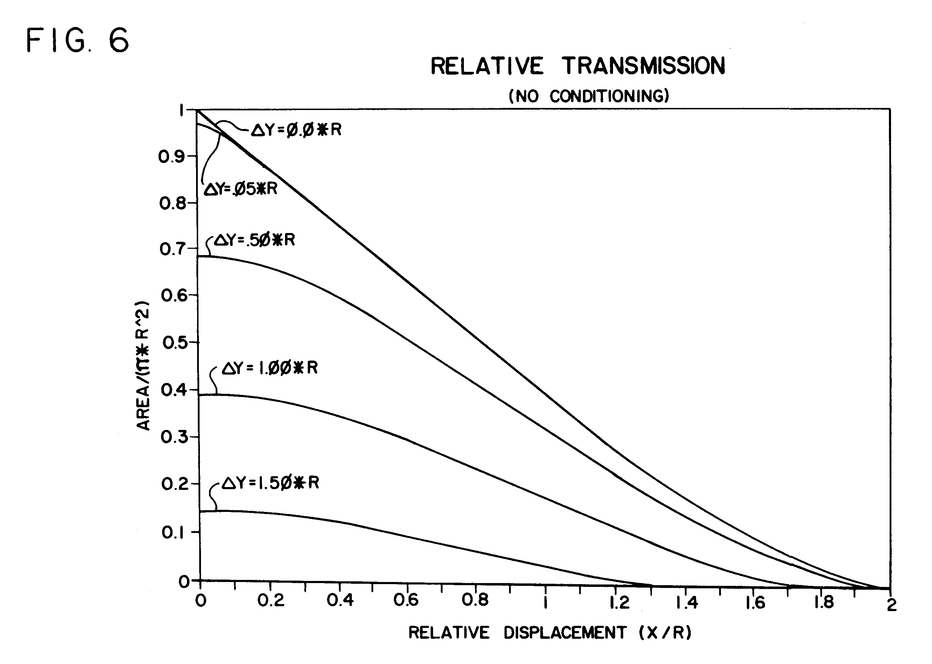

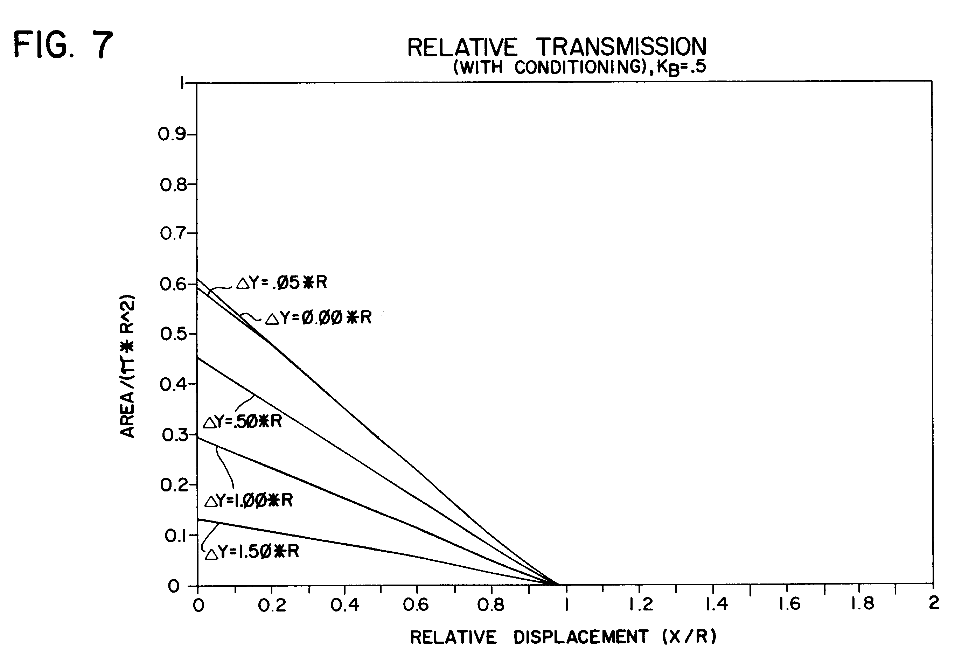

Even though sensitivity is improved by blocking a portion of the optical fibre cable ends, i.e. sensitivity is much less dependent upon alignment of the optical fibre cable ends along the axis of displacement, the level of transmission is reduced, as can be seen by comparing Figures 6 and 7 which illustrate relative transmission versus relative displacement for unblocked optical fibre cable ends and blocked optical fibre cable ends, respectively. Although the level of light transmitted is reduced by blocking a portion of the ends of the optical fibre cables 12 and 14, the resulting light level transmitted is well above the sensitivity threshold levels of most conventional light receivers. When large ΔY misalignments exist, the transmission levels for blocked and unblocked optical fibre cable ends are nearly equal. In addition, blocking a portion of the ends 34 and 38 of the optical fibre cables 12 and 14, respectively, linearises transmission with respect to displacement, as illustrated in Figure 7. Such linearisation permits the development of a linear device for sensing small displacements. Possible applications for such a linear device are pressure transducers or accelerometers.

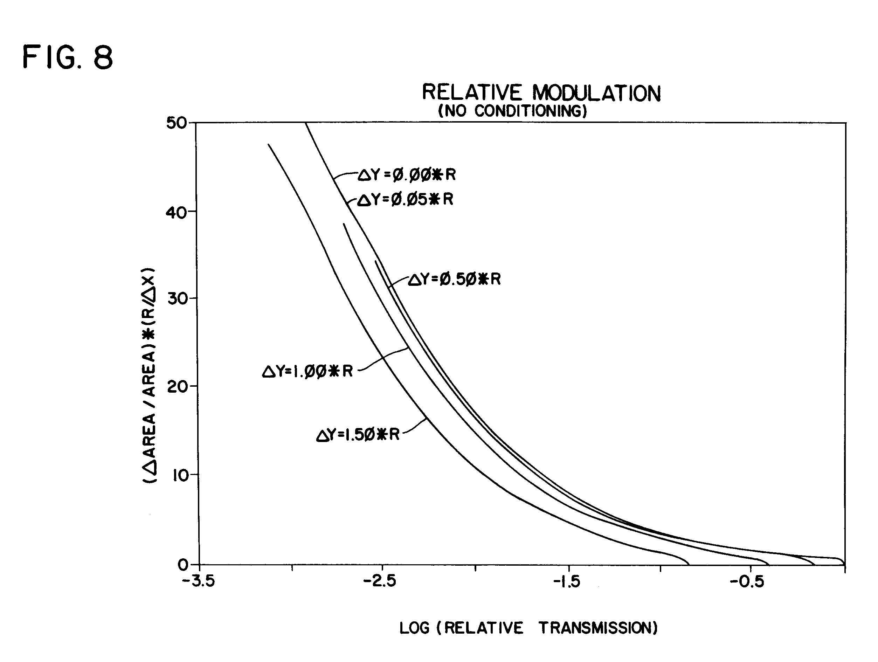

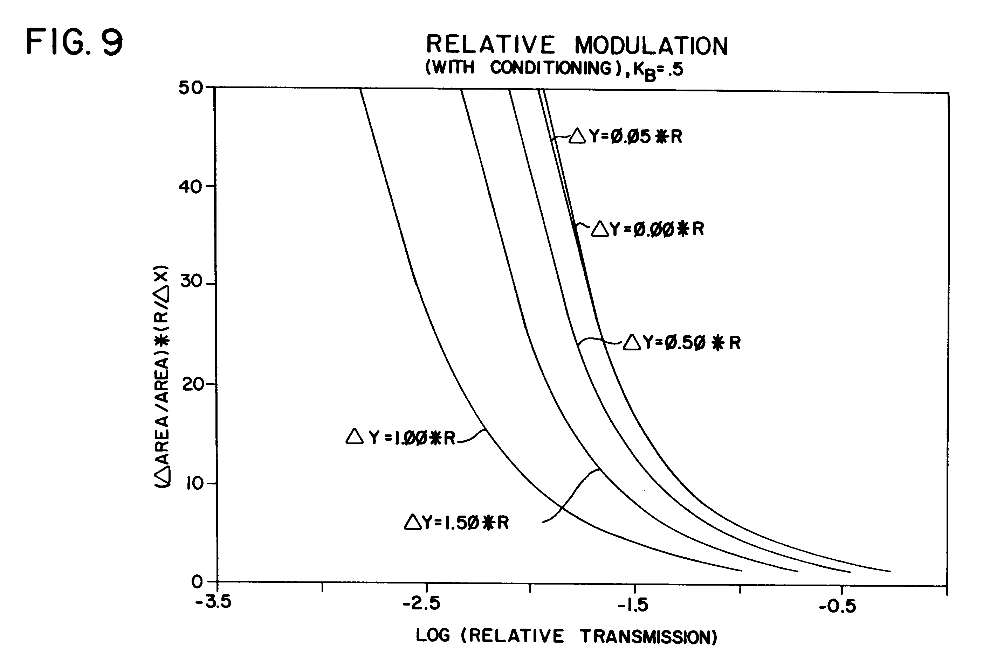

Although light transmission is reduced when a portion of the ends 34, 38 of the optical fibre cables 12, 14 is blocked, relative modulation is significantly higher. This is apparent by comparing Figures 8 and 9, which illustrate relative modulation versus relative displacement for unblocked optical fibre cable ends and blocked optical fibre cable ends, respectively.

When displacements to be measured are very small, a relative change (otherwise referred to as a ratio, or a log-difference) in transmission level is of importance, and not an absolute difference in light transmission. Thus, a device utilising the blocked optical fibre ends should be significantly more sensitive than the previously proposed devices.

## Claims

1. A displacement sensor comprising a first optical fibre cable (12) and a second optical fibre cable (14), the sensor comprising a dual cantilever beam shaped member (16) having a first portion (22) and a second portion (24) displaceable relative to the first portion (22), the first and second portions respectively of the beam shaped retaining (16) the first and second optical fibre cables (12, 14) by an end (34, 38) of the respective cable with the ends (34, 38) in spaced apart end to end relationship, and means (30) for retaining the first portion (22) of the beam shaped member (16) stationary while permitting displacement of the second portion (24) of the beam shaped member (16) and the second optical fibre cable (14) relative thereto along one axis (X) of a coordinate set of axes (X, Y, Z) while preventing significant displacement of the second optical fibre cable (14) relative to the first optical fibre cable (12) along the other two axes (Y, Z) of the coordinate set of axes (X, Y, Z), characterised in that a portion (50) of an end face of the end (34) of the first optical fibre cable (12) and a portion (52) of an end face of the end (38) of the second optical fibre cable (14) are blocked to prevent the transmission of light therethrough with the blocked portions (50, 52) of the first and second optical fibre cables (12, 14) being defined by a respective chord and part of the circular periphery of the respective cable, and with the blocked portion (50) of the end face of the end (34) of the first optical fibre cable (12) disposed on an opposite side to the blocked portion (52) of the end face of the end (38) of the second optical fibre cable (14).

2. A displacement sensor according to claim 1, including a light source (40) connected to the other end of one of the first and second optical fibre cables (12, 14) and a light receiver (46) connected to the other end of the other of the first and second optical fibre cables (12, 14).

3. A displacement sensor according to claim 1 or claim 2, wherein the blocked portions (50,52) of the first and second optical fibre cables (12, 14) are blocked by a light absorbing/reflecting film.

4. A displacement sensor according to any one of the preceding claims, wherein an intermediate portion (18, 20) of the dual beam shaped member (16) interposed between and connecting the first and second portions (22, 24) thereof comprises a pair of spaced apart laminar members (18, 20) which interconnect the first and second portions (22, 24) of the beam shaped member (16) and whose major surfaces are substantially parallel to one another.

5. A displacement sensor according to any one of the preceding claims, wherein each of the first and second portions (22, 24) of the beam shaped member (16) has a bore (26, 28) therethrough permitting the end (34) of the first optical fibre cable (12) to be received through and attached to the bore (26) in the first portion (22) of the beam shaped member (16) and permitting the end (38) of the second optical fibre cable (14) to be received through and attached to the bore (28) in the second portion (24) of the beam shaped member (16).

6. A displacement sensor according to claim 5, wherein the bore (26) in the first portion (22) of the beam shaped member (16) is in alignment with the bore (28) in the second portion (24) of the beam shaped member (16).

## Patentansprüche

1. Verschiebungssensor mit einem ersten optischen Faserkabel (12) und einem zweiten optischen Faserkabel (14), wobei der Sensor ein doppelt auslegerartig balkenförmiges Teil (16) autweist, mit einem ersten Abschnitt (22) und einem zweiten Abschnitt (24), welcher relativ zu dem ersten Abschnitt (22) verschiebbar ist, wobei die ersten bzw. zweiten Abschnitte des balkenförmigen Teiles (16) die ersten und zweiten optischen Feserkabel (12, 14) an einem Ende (34,38) der jeweiligen Kabel halten, wobei die Enden (34,38) voneinander beabstandet mit den Endflächen einander zugewandt angeordnet sind, und mit Einrichtungen (30) für das stationär Halten des ersten Abschnittes (22) des balkenförmigen Teiles (16), während eine Verschiebung des zweiten Abschnittes (24) des balkenförmigen Teiles (16) sowie des zweiten optischen Faserkabels (14) relativ zu jenem zugelassen ist entlang einer Achse (X) eines Koordinatensatzes von Achsen (X, Y, Z), während eine merkliche Verschiebung des zweiten optischen Faserkabels (14) relativ zu dem ersten optischen Faserkabel (12) entlang der beiden anderen Achsen (Y, X) des Koordinatensatzes von Achsen (X, Y, Z) verhindert wird, **dadurch gekennzeichnet**, daß ein Abschnitt (50) einer Stirn- bzw. Endfläche des Endes (34) des ersten optischen Faserkabels (12) sowie ein Abschnitt (52) einer End- bzw. Stirnfläche des Endes (38) des zweiten optischen Faserkabels (14) so blockiert sind, daß sie den Durchgang von Licht dahindurch verhindern, wobei diese blockierten Abschnitte (50,52) der ersten und zweiten optischen Faserkabel (12,14) definiert sind durch je eine Sehne bzw. Sekante und einen Teil des Kreisumfanges (Kreisabschnitts) des jeweiligen Kabels, und wobei der blockierte Abschnitt (50) der Stirnfläche des Endes (34) des ersten optischen Faserkabels (12) auf der entgegengesetzten Seite bezüglich des blockierten Abschnittes (52) der Stirnfläche des Endes (38) des zweiten optischen Faserkabels (14) angeordnet ist.

2. Verschiebungssensor nach Anspruch 1, einschließlich einer Lichtquelle (40), die mit dem einen Ende eines der ersten und zweiten optischen Faserkabel (12, 14) verbunden ist, sowie einschließlich eines Lichtempfängers (46), der mit dem anderen Ende des anderen der ersten und zweiten optischen Faserkabel (12, 14) verbunden ist.

3. Verschiebungssensor nach Anspruch 1 oder 2, wobei die blockierten Abschnitte (50,52) der ersten und zweiten optischen Faserkabel (12, 14) durch einen lichtabsorbierenden/reflektieren Film blockiert sind.

4. Verschiebungssensor nach einem der vorstehenden Anspüche, wobei ein Zwischenabschnitt (18,20) des doppelten, balkenförmigen Teiles (16), welcher zwischen den ersten und zweiten Abschnitten (22,24) desselben liegt und diese miteinander verbindet, ein paar von voneinander beabstandete Schichtteile (18,20) aufweist, die die ersten und zweiten Abschnitte (22,24) des balkenförmigen Teiles (16) miteinander verbinden und deren Hauptflächen im wesentlichen parallel zueinander sind.

5. Verschiebungssensor nach einem der vorstehenden Ansprüche, wobei jeder der ersten und zweiten Abschnitte (22,24) des balkenförmigen Teiles (16) eine Bohrung (26,28) hat, welche erlaubt, daß das Ende (34) des ersten optischen Faserkabels (12) durch diese Bohrung aufgenommen und in der Bohrung (26) in dem ersten Abschnitt (22) des balkenförmigen Teiles (16) befestigt werden kann, und erlaubt, daß das Ende (38) des zweiten optischen Faserkabels (14) in der Bohrung (28) in dem zweiten Abschnitt (24) des balkenförmigen Teiles (16) aufgenommen und in dieser befestigt werden kann.

6. Verschiebungssensor nach Anspruch 5, wobei die Bohrung (26) in dem ersten Abschnitt (22) des balkenförmigen Teiles (16) mit der Bohrung (28) in dem zweiten Abschnitt (24) des balkenförmigen Teiles (16) fluchtend ausgerichtet ist.

## Revendications

1. Détecteur de déplacement comprenant un premier câble à fibre optique (12) et un second câble à fibre optique (14), le détecteur comprenant un élément (16) en forme de double barreau en porte-à-faux comportant une première partie (22) et une seconde partie (24), mobile par rapport à la première partie (22), les première et seconde partie de l'élément en forme de barreau (16) maintenant, respectivement, les premier et second câbles à fibre optique (12, 14) par une extrémité (34, 38) du câble correspondant, les extrémités (34, 38) étant dans une disposition bout à bout espacées, et un moyen (30) pour maintenir la première partie (22) de l'élément en forme de barreau (16) fixe tout en permettant le déplacement de la seconde partie (24) de l'élément en forme de barreau (16) et du second câble à fibre optique (14) par rapport à celui-ci suivant un axe (X) d'un ensemble d'axes de coordonnées (X, Y, Z) tout en empêchant tout déplacement significatif du second câble à fibre optique (14) par rapport au premier câble à fibre optique (12) le long des deux autres axes (Y, Z) de l'ensemble d'axes de coordonnées (X, Y, Z) ; caractérisé en ce qu'une partie (50) d'une face d'extrémité de l'extrémité (34) du premier câble à fibre optique (12) et une partie (52) d'une face d'extrémité d'une extrémité (38) du second câble à fibre optique (14) sont obturées pour empêcher la transmission de lumière à travers elles, les parties obturées (50, 52) des premier et second câbles à fibre optique (12, 14) étant définies par une corde respective et une partie de la périphérie circulaire du câble correspondant, et la partie obturée (50) de la face d'extrémité de l'extrémité (34) du premier câble à fibre optique (12) étant disposée sur un côté opposé par rapport à la partie obturée (52) de la face d'extrémité de l'extrémité (38) du second câble à fibre optique (14).

2. Détection de déplacement selon la revendication 1, comprenant une source de lumière (40) reliée à l'autre extrémité de l'un des premier et second câbles à fibre optique (12, 14) et un récepteur de lumière (46) relié à l'autre extrémité de l'autre des premier et second câbles à fibre optique (12, 14).

3. Détection de déplacement selon la revendication 1 ou la revendication 2, dans lequel les parties obturées (50, 52) des premier et second câbles à fibre optique (12, 14) sont obturées par un film absorbant et/ou réfléchissant la lumière.

4. Détection de déplacement selon l'une quelconque des revendications précédentes, dans lequel une partie intermédiaire (18, 20) de l'élément en forme de double barreau (16) interposée entre et reliant les première et seconde parties (22, 24) de celui-ci comprend une paire d'élément laminaires écartés (18, 20) qui relient entre elles les première et seconde parties (22, 24) de l'élément en forme de barreau (16) et dont la plus grande partie des surfaces sont sensiblement parallèles l'une à l'autre.

5. Détection de déplacement selon l'une quelconque des revendications précédentes, dans lequel chacune des première et seconde parties (22, 24) de l'élément en forme de barreau (16) comporte un trou (26, 28) le traversant, permettant à l'extrémité (34) du premier câble à fibre optique (12) de passer au travers et d'être fixé au trou (26) dans la première partie (22) de l'élément en forme de barreau (16) et permettant à l'extrémité (38) du second câble à fibre optique (14) de passer au travers et d'être fixé au trou (28) dans la seconde partie (24) de l'élément en forme de barreau (16).

6. Détection de déplacement selon la revendication 5, dans lequel le trou (26) dans la première partie (22) de l'élément en forme de barreau (16) est en alignement avec le trou (28) dans la seconde partie (24) de l'élément en forme de barreau (16).
